# EUROPÄISCHE PATENTSCHRIFT

(11) **EP 1 714 375 B1**
(45) Veröffentlichungstag und Bekanntmachung des Hinweises auf die Patenterteilung: **14.03.2018**
(21) Anmeldenummer: 05701570.3
(22) Anmeldetag: 20.01.2005
(51) Int. Cl.: H02K 23/66, H02K 5/14, H02K 9/28, H01R 39/38, H02K 9/06

(54) **BÜRSTENSYSTEM FÜR EINEN ELEKTROMOTORISCHEN ANTRIEB**
BRUSH SYSTEM FOR AN ELECTRIC DRIVE UNIT
SYSTÈME DE BALAIS POUR ENTRAÎNEMENT À MOTEUR ÉLECTRIQUE

(30) Priorität: 10.02.2004 DE 102004006557
(43) Veröffentlichungstag der Anmeldung: 25.10.2006
(73) Patentinhaber: Brose Fahrzeugteile GmbH & Co. KG, Würzburg, 97076 Würzburg (DE)
(72) Erfinder: EISERT, Horst, 97297 Waldbüttelbrunn (DE); HESSDÖRFER, Robert, 97753 Karlstadt-Stetten (DE)
(74) Vertreter: Isarpatent
(86) Internationale Anmeldenummer: PCT/EP2005/050238
(87) Internationale Veröffentlichungsnummer: WO 2005/078907

(56) Entgegenhaltungen:
- EP-A- 0 363 191
- DE-U1- 29 512 310
- FR-A- 2 763 760
- FR-A- 2 779 585
- FR-A- 2 780 578

## Beschreibung

Die Erfindung betrifft ein Bürstensystem für einen elektromotorischen Antrieb sowie einen elektromotorischen Antrieb, der mit einem derartigen Bürstensystem versehen ist.

Bei elektromotorischen Antrieben erfolgt eine gestufte Drehzahlregelung unter Verwendung einer Widerstandsschaltung. Im Betrieb wird von dieser Widerstandsschaltung elektrische Energie in Wärmeenergie umgewandelt. Diese Wärmeenergie kann den elektromotorischen Antrieb bezüglich seiner Lebensdauer negativ beeinflussen. Es kann zu einer Überhitzung des An-triebs und zu einem erhöhten Verschleiß der Bestandteile des Antriebs kommen. Ist die Widerstandsschaltung motorintern angeordnet- dann kann im Allgemeinen nicht gewährleistet werden, dass ein zur Abkühlung geeigneter Luftstrom fließt. Dies kann zu einer unerwünschten Hitzekonzentration in Teilbereichen der Widerstandsschaltung oder im gesamten Antrieb führen, was schließlich zu einem Ausfall von Komponenten führen kann.

Zur Ableitung bzw. Abführung der entstandenen Wärmeenergie ist es bereits bekannt, Kühlrippen, großflächige Kühlkörper oder eine Zusatzbelüftung zu verwenden. Weiterhin ist es bekannt, zur Erhöhung der Lebensdauer temperaturbeständigere, dauerfestere und damit kostenintensivere Antriebskomponenten einzusetzen.

Aus der DE 101 29 234 A1 ist eine elektrische Antriebseinheit bekannt. Diese weist ein Getriebegehäuse, ein Motorgehäuse, ein separat ausgebildetes und wasserdicht abgeschlossenes Elektronikgehäuse, einen Bürstenhalter und einen am Bürsten-halter angeordneten Signalempfänger auf. Der Bürstenhalter ist mit Steckkontakten versehen, mit denen eine im Elektronikgehäuse vorgesehene Elektronik elektrisch verbunden ist.

Weiterhin ist der Bürstenhalter im Übergangsbereich zwischen dem Motorgehäuse und dem Getriebegehäuse am Motorgehäuse befestigt. Hinweise auf wie auch immer geartete Kühlmaßnahmen sind der DE 101 29 234 A1 nicht entnehmbar.

Die FR 2 763 760 A1 beschreibt eine Steuerung für einen elektrischen Antrieb, welche Stromführungen aufweist, welche im Inneren eines Gehäuses angeordnet sind.

Die EP 0 363 191 A2 beschreibt einen flachen Widerstand für eine Gebläsesteuereinheit einer Automobilklimaanlage und insbesondere einen flachen Widerstand mit einer Vielzahl von in Reihe geschalteten Widerständen auf einem elektrisch isolierenden Substrat zur Steuerung der Drehzahl des Gebläses.

Die DE 295 12 310 U1 beschreibt ein Bürstensystem gemäß dem Oberbergriff des Patentanspruchs 1.

Die Aufgabe der Erfindung besteht darin, einen Weg aufzuzeigen, wie in einem elektromotorischen Antrieb gebildete Wärmeenergie wirkungsvoll abgeführt werden kann.

Diese Aufgabe wird durch Verwendung eines Bürstensystems mit den im Anspruch 1 angegebenen Merkmalen gelöst. Vorteilhafte Ausgestaltungen und Weiterbildungen der Erfindung sind in den abhängigen Ansprüchen 2 - 14 angegeben. Der Anspruch 15 hat einen elektromotorischen Antrieb zum Gegenstand, welcher ein Bürstensystem nach einem der Ansprüche 1 - 14 aufweist.

Die Vorteile der Erfindung bestehen insbesondere darin, dass durch die Integration der Widerstandseinheit in das Bürstensystem und die spezielle Ausgestaltung der Widerstandseinheit als in einem mit Luftdurchlassöffnungen versehenen Widerstandsgehäuse enthaltener Flachwiderstand das Fließen des zur Abführung der entstandenen Wärmeenergie notwendigen Luftstroms besser gewährleistet werden kann als bei bekannten Antriebssystemen. Weiterhin wird durch die flache Ausbildung der Widerstandseinheit und deren Integration in das Bürstensystem ein kompakter, platzsparender Aufbau erreicht.

Erfindungsgemäß handelt es sich bei den Luftdurchlass-öffnungen um bohrungs- oder schlitzförmige Durchbrüche. Diese können in vorteilhafter Weise bereits während des Fertigungsvorganges der Widerstandseinheit in das Widerstandsgehäuse gebracht werden. Dabei ist selbstverständlich darauf zu achten, dass die innerhalb des Widerstandsgehäuses vorgesehene Widerstandsschaltung nicht beschädigt wird.

Durch die im Anspruch 2 angegebenen Merkmale wird erreicht, dass das Bürstensystem über die Welle des Motors geschoben und am Gehäuse des Motors befestigt werden kann. Dabei ist ein platzsparender Aufbau ebenso gewährleistet wie eine sichere Kontaktierung der Kohlebürsten mit den Kommutatorlamellen des Elektromotors.

Durch die in den Ansprüchen 3 und 4 angegebenen Merkmale wird eine platzsparende Anordnung der Widerstandseinheit im Bürstensystem bei optimierter Anpassung der Widerstandseinheit an die Form des Grundkörpers des Bürstensystems erreicht.

Die im Anspruch 5 angegebenen Merkmale erlauben ein schnelles und einfaches Einsetzen der Widerstandseinheit in das Bürstensystem.

Die im Anspruch 6 angegebenen Anschlusslaschen, die vorzugsweise in eine jeweils zugehörige Aufnahmetasche des Widerstandsgehäuses eingeführt sind, erlauben in einfacher Weise die Kontaktierung der im Widerstandsgehäuse enthaltenen Widerstandsschaltung mit einer jeweils zugehörigen Stromführung auf dem Grundkörper des Bürstensystems .

Besteht das Widerstandsgehäuse aus Aluminium, wie es im Anspruch 7 angegeben ist, oder aus einem anderen Leichtmetall, dann kann das gesamte Bürstensystem im Sinne einer Leichtbauweise ausgeführt sein.

Mittels der in den Ansprüchen 8, 9 und 11 angegebenen Merkmale wird in vorteilhafter Weise eine Vergrößerung der zur Wärmeableitung zur Verfügung stehenden Gesamtfläche des Widerstandsgehäuses erreicht.

Die im Anspruch 10 angegebenen Luftstromablenkelemente ermöglichen eine gezielte Führung des Luftstromes in dem Sinne, dass von stark wärmeerzeugenden Bauteilen Wärme effektiv abgeführt werden kann und dass andererseits auch verhindert werden kann, dass abgeführte Wärme unmittelbar in Richtung wärmeempfindlicher Bauteile geleitet wird.

Bei der im Widerstandsgehäuse enthaltenen Widerstandsschaltung kann es sich um eine Widerstandsfolie, um einen mäander-förmigen Flachwiderstand oder um einen mäanderförmig gelegten Widerstandsdraht handeln.

Die im Anspruch 13 angegebene gas-, flüssigkeits- und festkörperdichte Ausbildung des Widerstandsgehäuses hat den Vorteil, dass die im Gehäuse befindlichen Bauteile vor Korrosion und anderweitiger Beschädigung durch im Motorraum auftretende Gase, Flüssigkeiten oder Festkörper geschützt sind.

Eine Ausbildung des Widerstandsgehäuses im Sinne der Merkmale des Anspruchs 14 erlaubt ein Austreten von Gasen, Flüssigkeiten bzw. Feuchtigkeit und Festkörpern, die während der Produktion und des Einsatzes der Widerstandseinheit in unerwünschter Weise in das Widerstandsgehäuse eingedrungen sind.

Weitere vorteilhafte Eigenschaften der Erfindung ergeben sich aus deren beispielhafter Erläuterung anhand der Figuren. Es zeigt:
- Figur 1: eine Skizze mit den zum Verständnis der Erfindung wesentlichen Bestandteilen eines elektromotorischen Antriebs,
- Figur 2: eine Skizze einer detaillierteren Ansicht des Bürstensystems 6 von System 1,
- Figur 3: eine Skizze der rückwärtigen Ansicht des in der Figur 2 dargestellten Bürstensystems 6 und
- Figur 4: eine Skizze zur Erläuterung einer Weiterbildung der Erfindung.

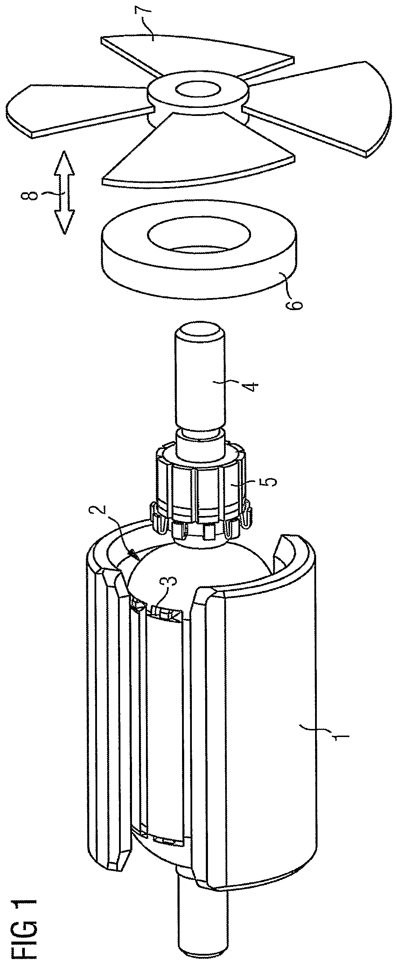

Die Figur 1 zeigt eine Skizze mit den zum Verständnis der Erfindung wesentlichen Bestandteilen eines elektromotorischen Antriebs. Ein derartiger elektromotorischer Antrieb weist ein nicht dargestelltes Motorgehäuse auf, in welchem Permanent-magnete 1 angeordnet sind. Das Motorgehäuse und die Permanentmagnete bilden einen Stator. Weiterhin enthält der elektromotorische Antrieb einen Anker 2, auf welchem Spulen 3 vorgesehen sind. Der Anker 2 umfasst ferner eine Ankerwelle 4, auf welcher ein Kommutator mit Kommutatorlamellen 5 angebracht ist, wobei die Kommutatorlamellen mit den jeweiligen Wicklungen der Spulen 3 elektrisch leitend verbunden sind.

Ferner weist der dargestellte elektromotorische Antrieb ein Bürstensystem 6 auf, das im zusammengesetzten Zustand des An-triebs derart um die Welle 4 positioniert ist, dass es den Kommutatorlamellen unmittelbar benachbart ist. Dieses Bürstensystem 6 ist im montierten Zustand am Motorgehäuse befestigt.

Weiterhin ist die Ankerwelle 1 im montierten Zustand des Antriebs mit einem Lüfterrad 7 mechanisch gekoppelt und treibt dieses an. Das Lüfterrad 7 ist derart ausgebildet, dass bei seiner Drehung mit der Welle 4 die Luft in der mit dem Pfeil 8 gekennzeichneten Richtung strömt, d. h. in einer im wesentlichen parallelen Richtung zur Welle 4 des elektromotorischen Antriebs.

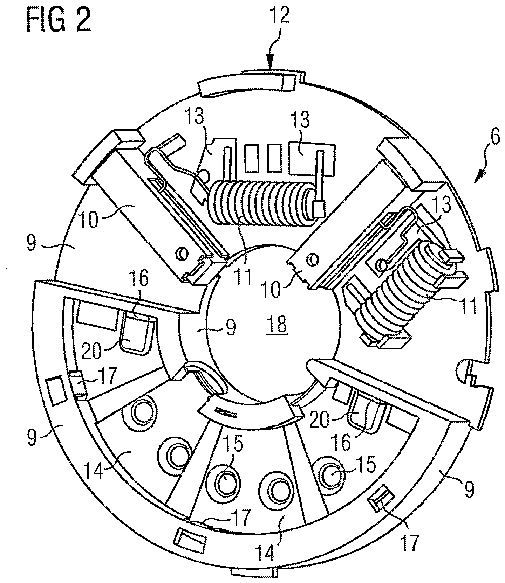

Durch eine, spezielle Ausgestaltung des Bürstensystems 6, die nachstehend anhand der Figuren 2 - 4 näher erläutert wird, ist dafür gesorgt, dass zumindest ein Teil des vom Lüfterrad 7 erzeugten Luftstromes die erzeugte Wärmeenergie effektiv aus dem Motor abführt.

Die Figur 2 zeigt eine Skizze einer detaillierteren Ansicht des Bürstensystems 6 von Figur 1. Das dargestellte Bürstensystem 6 weist einen Grundkörper 9 aus einem elektrisch nicht leitfähigen Material auf, beispielsweise aus Hartpapier oder aus Kunststoff. Der Grundkörper 9 hat eine im Wesentlichen scheibenförmigen, vorzugsweise kreisscheibenförmigen Grundform und ist in seinem mittleren Bereich mit einer Aussparung 18 versehen.

Auf dem Grundkörper 9 sind Bürstenträgerelemente 10 befestigt, die beispielsweise als Bürstenköcher ausgebildet sind. Innerhalb dieser Bürstenträgerelemente 10 sind die Kohlebürsten gelagert, die im Betriebszustand die Kommutatorlamellen 5 kontaktieren. Weiterhin sind auf dem Grundkörper 9 Entstörelemente befestigt, beispielsweise Drosseln 11 und Kondensatoren. Ferner ist am Grundkörper 9 eine Steckverbindung 12 vorgesehen, über welche das Bürstensystem mit einer externen Spannungsversorgung elektrisch kontaktierbar ist. Die notwendigen elektrischen Verbindungen der auf dem Grundkörper 9 befestigten Bauteile untereinander und mit weiteren Bauteilen erfolgt über auf dem Grundkörper vorgesehene Stromführungen 13. Diese Stromführungen sind in Form eines Stanzgitters, das aus einer Metallplatte ausgestanzt wurde, als Leiterplatte oder als einzelne Leiterbahnen, die entweder in den Grundkörper eingespritzt sind oder nachträglich auf diesen aufgebracht wurden, ausgebildet. Nachfolgend wird angenommen, dass die Stromführungen als Leiterbahnen realisiert sind.

Gemäß der vorliegenden Erfindung ist in das Bürstensystem 6 eine Widerstandseinheit integriert, die ein Widerstandsgehäuse 14 und eine in diesem Widerstandsgehäuse vorgesehene Flachwiderstandsanordnung aufweist, die nachfolgend stets als Flachwiderstand bezeichnet wird. Bei diesem Flachwiderstand handelt es sich um eine Widerstandsfolie, um einen mäander-förmigen Flachwiderstand oder um einen mäanderförmig angeordneten Widerstandsdraht. Dieser Flachwiderstand wird im Rahmen einer gestuften Drehzahlregelung des elektromotorischen Antriebs verwendet.

Das Widerstandsgehäuse 14 weist einen im Wesentlichen scheibenförmigen, vorzugsweise scheibensegmentförmige Grundform auf und besteht aus einem Leichtmetall, vorzugsweise Aluminium. Dies erlaubt es, das gesamte Bürstensystem im Sinne einer Leichtbauweise zu realisieren.

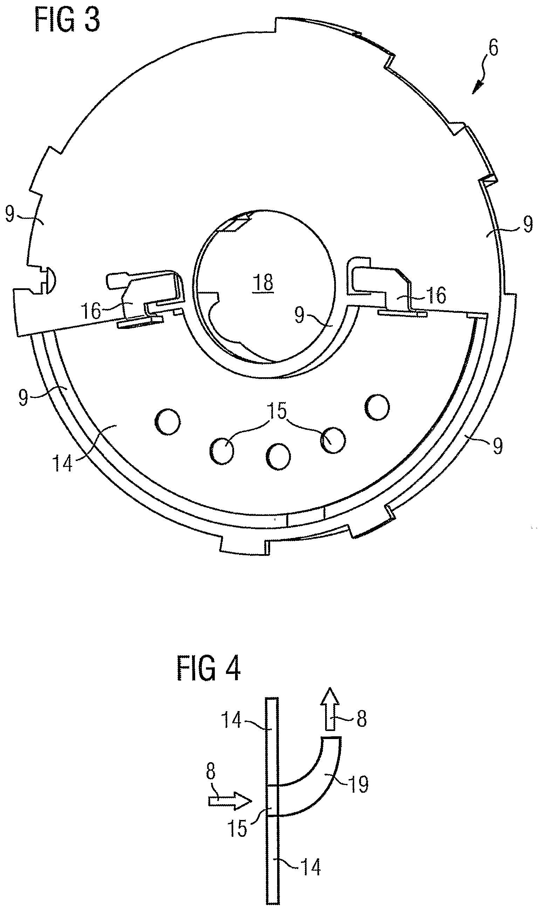

Wie aus den Figuren 2 und 3 ersichtlich ist, ist das Widerstandsgehäuse 14 Bestandteil des Bürstensystems 6. Das Widerstandsgehäuse 14 ist in derselben Ebene angeordnet wie der Grundkörper 9 und in eine weitere, vorzugsweise scheibensegmentförmige Aussparung des Grundkörpers 9 formschlüssig ein-gesetzt. Die Befestigung des Widerstandsgehäuses 14 am Grundkörper 9 erfolgt mittels Rastverbindungen 17, in welche das Widerstandsgehäuse nach seinem Einsetzen einschnappt. Das Einsetzen des Widerstandsgehäuses in die Aussparung des Grundkörpers erfolgt von der Unterseite des Grundkörpers her.

Die notwendige elektrische Kontaktierung der Anschlüsse des im Widerstandsgehäuse 14 angeordneten Flachwiderstandes erfolgt unter Verwendung von Anschlusslaschen 16, die in Aufnahmetaschen 20 des Widerstandsgehäuses 14 eingeschoben sind. Die Anschlusslaschen 16 verbinden die Endanschlüsse des Flachwiderstandes mit jeweils einer der Leiterbahnen 13. Beispielsweise verbindet eine der Leiterbahnen einen Endanschluss des Flachwiderstandes mit einem Stromanschlusskabel, welches von außen kommend in einen Kontakt der Steckverbindung 12 des Bürstensystems 6 geführt ist. Ferner verbindet eine andere der Leiterbahnen 13 den anderen Endanschluss des Flachwiderstandes über eines der Entstörelemente 11 mit einer der Kohlebürsten.

Um eine gute Durchlüftung und damit eine gute Wärmeabführung gewährleisten zu können, weist das Widerstandsgehäuse 14 eine Vielzahl von Luftdurchlassöffnungen 15 auf. Bei diesen Luftdurchlassöffnungen 15 handelt es sich um Löcher oder um Schlitze, die bereits bei der Produktion der Widerstandseinheit 14 in das Gehäuse eingebracht wurden. Je mehr Durchlüftung benötigt wird, desto größer kann die Anzahl der Luftdurchlassöffnungen sein. Alternativ oder zusätzlich dazu kann auch die Größe der Luftdurchlassöffnungen verändert werden.

Aus einer gemeinsamen Betrachtung der Figuren 1 und 2 ist ersichtlich, dass die Luftdurchlassöffnungen 15 derart angeordnet sind, dass sie den auf die Rotation des Lüfterrads 7 zurückzuführenden Luftström ungehindert durchlassen. Dadurch wird die von der Widerstandseinheit erzeugte Wärme wirkungsvoll abgeleitet.

Zu einer wirkungsvollen Ableitung der von der Widerstandseinheit erzeugten Wärme trägt auch das großflächige, gut wärmeleitende Gehäuse 14 bei, welches im Inneren des Widerstandsgehäuses entstehende Wärme nach außen weitergibt.

Um die Wärmeableitung weiter zu verbessern, ist das Widerstandsgehäuse 14 vorzugsweise mit oberflächenvergrößernden Fortsätzen versehen. Derartige Fortsätze sind beispielsweise Sicken oder Falze. Weiterhin kann es sich bei diesen oberflächenvergrößernden Fortsätzen auch um Luftstromablenkelemente handeln.

Ein Beispiel für ein derartiges Luftstromablenkelement ist in der Figur 4 veranschaulicht. In der Figur 4 ist eine Schnitt-darstellung gezeigt, aus welcher eines der Löcher 15 sowie die oberhalb und unterhalb des Loches vorliegenden Teile des Widerstandsgehäuses 14 ersichtlich sind. Weiterhin ist mit den Pfeilen 8 die Strömungsrichtung der Luft veranschaulicht. Es ist ersichtlich, dass die durch das Loch 15 im Widerstandsgehäuse geleitete Luft durch das anschließende Luftstromablenkelement 19 umgeleitet wird und nach dem Austritt aus dem Luftstromablenkelement eine andere Strömungsrichtung hat. Durch eine Verwendung derartiger Luftstromablenkelemente kann die Strömungsrichtung der Luft beeinflusst werden. Es besteht die Möglichkeit, wärmeabführende Luft vermehrt in Bereich zu leiten, in denen stark wärmeerzeugende Bauteile angeordnet sind. Weiterhin besteht die Möglichkeit zu verhindern, dass abgeführte Wärme unmittelbar in Richtung von wärmeempfindlichen Bauteilen geleitet wird.

Ein oberflächenvergrößernder Fortsatz des Widerstandsgehäuses 14 kann in vorteilhafter Weise auch das Widerstandsgehäuse mit dem Gehäuse des Motors verbinden. Dies hat zur Folge, dass auch Wärme über das Motorgehäuse abgeführt wird. Auch diese Maßnahme wirkt einer Überhitzung der Antriebseinheit entgegen.

Das Widerstandsgehäuse kann gemäß einer Ausführungsform der Erfindung gas-, flüssigkeits- und festkörperdicht ausgebildet sein. Dies hat den Vorteil, dass im Betrieb der Antriebseinheit ausgeschlossen ist, dass beispielsweise im Motorraum eines Kraftfahrzeugs, in welchem sich die Antriebseinheit befindet, auftretende Gase, Flüssigkeiten oder Festkörper die im Gehäuse befindlichen Bauteile beschädigen. Insbesondere wird dadurch ein Auftreten von Korrosion verhindert.

Gemäß einer anderen Ausführungsform der Erfindung kann das Widerstandsgehäuse auch offen ausgebildet sein. Diese offene Ausbildung des Widerstandsgehäuses hat den Vorteil, dass Gase, Flüssigkeiten bzw. Feuchtigkeit sowie Festkörper, die bereits während des Produktionsorgangs und während des Einsatzes in unerwünschter Weise in das Widerstandsgehäuse gelangt sind, in einfacher Weise auch wieder aus diesem entfernt werden können.

Die Erfindung betrifft nach alledem ein Bürstensystem, das in einem elektromotorischen Antrieb verwendet werden kann. Das Bürstensystem weist einen Grundkörper, auf dem Grundkörper befestigte Bürstenträgerelemente und Entstörelemente auf. Weiterhin sind auf dem Grundkörper Stromführungen vorgesehen, über die die notwendigen elektrischen Verbindungen hergestellt werden. Eine Widerstandseinheit, die einen in einem Widerstandsgehäuse angeordneten Flachwiderstand enthält, ist in den Grundkörper eingesetzt, an diesem befestigt und mit den Stromführungen kontaktiert. Das Widerstandsgehäuse weist Luftdurchlassöffnungen auf, die einen Luftstrom, der auf die Drehung eines Lüfterrads zurückzuführen ist, begünstigen. Durch diesen Luftstrom wird in effektiver Weise entstandene Wärme abgeführt, insbesondere Wärme, die während des Betriebs vom Flachwiderstand gebildet wird.

## Patentansprüche

1. Bürstensystem für einen elektromotorischen Antrieb zum Antreiben eines Lüfterrades (7), welches aufweist:
- einen Grundkörper (9),
- auf dem Grundkörper (9) befestigte Bürstensystemelemente, insbesondere Bürstenträger (10),
- auf oder in dem Grundkörper (9) vorgesehene Stromführungen (13) in Form eines Stanzgitters, das aus einer Metallplatte ausgestanzt wurde, oder in Form einer Leiterplatte oder in Form von einzelnen Leiterbahnen, die entweder in den Grundkörper eingespritzt sind oder nachträglich auf diesen aufgebracht wurden, und
- mindestens einen in einem Widerstandsgehäuse (14) eingeschlossenen elektrischen Flachwiderstand, **dadurch gekennzeichnet,**
**dass** das Widerstandsgehäuse (14) aus einem wärmeleitfähigen Material besteht und mit Luftdurchlassöffnungen (15) versehen ist, wobei die Luftdurchlassöffnungen (15) als bohrungs- oder schlitzförmige Durchbrüche durch das Widerstandsgehäuse (14) ausgebildet und derart angeordnet sind, dass sie den auf die Rotation des Lüfterrades (7) zurückführenden Luftstrom ungehindert durchlassen

2. Bürstensystem nach Anspruch 1, **dadurch gekennzeichnet, dass** der Grundkörper (9) eine scheibenförmige Grundform aufweist und in seinem mittleren Bereich eine Aussparung (18) zur Aufnahme der Ankerwelle mit dem Kommutator hat.

3. Bürstensystem nach Anspruch 1 oder 2, **dadurch gekennzeichnet, dass** das Widerstandsgehäuse (14) in einer Ebenen des Grundkörpers (9) angeordnet ist und in eine weitere Aussparung des Grundkörpers (9) eingesetzt ist.

4. Bürstensystem nach Anspruch 3, **dadurch gekennzeichnet, dass** das Widerstandsgehäuse (14) eine scheibensegmentförmige Grundform aufweist.

5. Bürstensystem nach einem der vorhergehenden Ansprüche, **dadurch gekennzeichnet, dass** das Widerstandsgehäuse (14) mit dem Grundkörper (9) über Rastverbindungen (17) verbunden ist.

6. Bürstensystem nach einem der vorhergehenden Ansprüche, **dadurch gekennzeichnet, dass** der im Widerstandsgehäuse (14) enthaltene Flachwiderstand über Anschlusslaschen (16) an die Stromführungen (13) des Grundkörpers (9) angeschlossen ist.

7. Bürstensystem nach einem der vorhergehenden Ansprüche, **dadurch gekennzeichnet, dass** das Widerstandsgehäuse (14) aus einem Leichtmetall besteht.

8. Bürstensystem nach einem der vorhergehenden Ansprüche, **dadurch gekennzeichnet, dass** das Widerstandsgehäuse (14) mit oberflächenvergrößernden Fortsätzen versehen ist.

9. Bürstensystem nach Anspruch 8, **dadurch gekennzeichnet, dass** die oberflächenvergrößernden Fortsätze Sicken oder Falze sind.

10. Bürstensystem nach Anspruch 8, **dadurch gekennzeichnet, dass** die oberflächenvergrößernden Fortsätze Luftstromablenkelemente (19) sind.

11. Bürstensystem nach einem der Ansprüche 8- 10, **dadurch gekennzeichnet, dass** ein oberflächenvergrößernder Fortsatz zur Kontaktierung des Widerstandsgehäuse (14) mit dem Motorgehäuse vorgesehen ist.

12. Bürstensystem nach einem der vorhergehenden Ansprüche, **dadurch gekennzeichnet, dass** der Flachwiderstand eine Widerstandsfolie, ein mäanderförmiger Flachwiderstand oder ein drahtförmiger Widerstand ist.

13. Bürstensystem nach einem der vorhergehenden Ansprüche, **dadurch gekennzeichnet, dass** das Widerstandsgehäuse (14) gas-, flüssigkeits- und festkörperdicht ausgebildet ist.

14. Bürstensystem nach Anspruch 1 oder 12, **dadurch gekennzeichnet, dass** das Widerstandsgehäuse (14) offen ausgebildet ist.

15. Elektromotorischer Antrieb, welcher ein Bürstensystem nach einem der Ansprüche 1-14 aufweist.

## Claims

1. Brush system for an electric motor drive for driving a fan propeller (7), comprising:
a base body (9),
brush system elements, in particular brush carriers (10), fixed to the base body (9),
conductors (13) provided on or in the base body (9), in the form of a lead frame punched out from a metal plate or in the form of a circuit board or in the form of individual strip conductors, which are either injected into or retroactively attached to the base body, and
at least one electric flat resistor enclosed in a resistor housing (14), **characterised in that** the resistor housing (14) consists of a thermally conductive material and is provided with ventilation openings (15), the ventilation openings (15) being formed as hole-shaped or slit-shaped clearances through the resistor housing (14) and being arranged in such a way that they leave the airflow due to the rotation of the fan propeller (7) unobstructed.

2. Brush system according to claim 1, **characterised in that** the base body (9) has a disc-shaped basic form and has in the central region thereof a recess (18) for receiving the armature shaft with the commutator.

3. Brush system according to either claim 1 or claim 2, **characterised in that** the resistor housing (14) is arranged in a plane of the base body (9) and inserted into a further recess in the base body (9).

4. Brush system according to claim 3, **characterised in that** the resistor housing (14) has a disc-segment-shaped basic form.

5. Brush system according to any of the preceding claims, **characterised in that** the resistor housing (14) is connected to the base body (9) via latch connections (17).

6. Brush system according to any of the preceding claims, **characterised in that** the flat resistor contained in the resistor housing (14) is connected to the conductors (13) of the base body (9) via connection lugs (16).

7. Brush system according to any of the preceding claims, **characterised in that** the resistor housing (14) consists of a light metal.

8. Brush system according to any of the preceding claims, **characterised in that** the resistor housing (14) is provided with surface-enlarging extensions.

9. Brush system according to claim 8, **characterised in that** the surface-enlarging extensions are beads or seams.

10. Brush system according to claim 8, **characterised in that** the surface-enlarging extensions are airflow deflection elements (19).

11. Brush system according to any of claims 8 - 10, **characterised in that** a surface-enlarging extension is provided for contacting the resistor housing (14) with the motor housing.

12. Brush system according to any of the preceding claims, **characterised in that** the flat resistor is a resistance film, a meander-shaped flat resistor or a wire-shaped resistor.

13. Brush system according to any of the preceding claims, **characterised in that** the resistor housing (14) is formed tight against gases, liquids and solid bodies.

14. Brush system according to either claim 1 or claim 12, **characterised in that** the resistor housing (14) is formed open.

15. Electric motor drive comprising a brush system according to any of claims 1 - 14.

## Revendications

1. Système de balais pour entraînement à moteur électrique destiné à l'entraînement d'une roue de ventilateur (7), qui comporte :
- un corps de base (9),
- des éléments de système de balais, en particulier des porte-balais (10), fixés sur le corps de base (9),
- des éléments de conduction de courant (13) prévus sur ou dans le corps de base (9) sous la forme d'un grillage estampé, qui a été estampé dans une plaque métallique, ou sous la forme d'une carte de circuits imprimés ou sous la forme de pistes conductrices individuelles, qui ont été soit injectées dans le corps de base, soit appliquées ultérieurement sur celui-ci, et
- au moins une résistance électrique plane enfermée dans un boîtier de résistance (14), **caractérisé en ce que**
le boîtier de résistance (14) est constitué d'un matériau conducteur thermique et est pourvu d'orifices de passage d'air (15), les orifices de passage d'air (15) étant réalisés sous la forme de trous en forme d'alésages ou de fentes à travers le boîtier de résistance (14) et étant disposés de telle manière qu'ils laissent passer librement le flux d'air induit par la rotation de la roue de ventilateur (7).

2. Système de balais selon la revendication 1, **caractérisé en ce que** le corps de base (9) présente une forme de base en forme de disque et comporte dans sa zone centrale un évidement (18) destiné à recevoir l'arbre d'induit avec le collecteur.

3. Système de balais selon la revendication 1 ou 2, **caractérisé en ce que** le boîtier de résistance (14) est disposé dans un plan du corps de base (9) et est placé dans un autre évidement du corps de base (9).

4. Système de balais selon la revendication 3, **caractérisé en ce que** le boîtier de résistance (14) présente une forme de base en forme de segment de disque.

5. Système de balais selon l'une des revendications précédentes, **caractérisé en ce que** le boîtier de résistance (14) est relié au corps de base (9) par le biais d'assemblages à encliquetage (17).

6. Système de balais selon l'une des revendications précédentes, **caractérisé en ce que** la résistance plane contenue dans le boîtier de résistance (14) est raccordée aux éléments de conduction de courant (13) du corps de base (9) par le biais de cosses (16).

7. Système de balais selon l'une des revendications précédentes, **caractérisé en ce que** le boîtier de résistance (14) est constitué d'un métal léger.

8. Système de balais selon l'une des revendications précédentes, **caractérisé en ce que** le boîtier de résistance (14) est pourvu d'extensions augmentant la surface.

9. Système de balais selon la revendication 8, **caractérisé en ce que** les extensions augmentant la surface sont des nervures ou des plis.

10. Système de balais selon la revendication 8, **caractérisé en ce que** les extensions augmentant la surface sont des éléments de déviation de flux d'air (19).

11. Système de balais selon l'une des revendications 8 à 10, **caractérisé en ce qu'**une extension augmentant la surface est prévue pour la connexion du boîtier de résistance (14) avec le carter du moteur.

12. Système de balais selon l'une des revendications précédentes, **caractérisé en ce que** la résistance plane est une feuille de résistance, une résistance plane de forme sinueuse ou une résistance filiforme.

13. Système de balais selon l'une des revendications précédentes, **caractérisé en ce que** le boîtier de résistance (14) est réalisé étanche aux gaz, liquides et solides.

14. Système de balais selon la revendication 1 ou 12, **caractérisé en ce que** le boîtier de résistance (14) est réalisé ouvert.

15. Entraînement à moteur électrique, qui comporte un système de balais selon l'une des revendications 1 à 14.
